# EUROPEAN PATENT SPECIFICATION

(11) **EP 3 219 513 B1**
(45) Date of publication and mention of the grant of the patent: **12.09.2018**
(21) Application number: 17158721.5
(22) Date of filing: 01.03.2017
(51) Int. Cl.: B60C 11/04, B60C 11/00, B60C 11/12, B60C 11/03

(54) **PNEUMATIC TIRE**
LUFTREIFEN
PNEUMATIQUE

(30) Priority: 18.03.2016 JP 2016055869
(43) Date of publication of application: 20.09.2017
(73) Proprietor: Sumitomo Rubber Industries, Ltd., Kobe-shi, Hyogo-ken (JP)
(72) Inventor: OBA, Ryo, Kobe-shi, Hyogo-ken 651-0072 (JP)
(74) Representative: Manitz Finsterwald Patentanwälte PartmbB

(56) References cited:
- EP-A1- 2 578 417
- WO-A1-2015/002096
- JP-A- 2009 149 124

## Description

### [Technical Field]

The present invention relates to a pneumatic tire that improves wear resistance of shoulder land portions while suppressing sideslip on snow and ice.

### [Technical Background]

For example, the following Patent Document 1 proposes a pneumatic tire in which shoulder narrow grooves are provided in shoulder land portions. In the pneumatic tire of Patent Document 1, similar to a conventional tire, in a tread profile, a camber amount, which is a tire radial direction distance between a tire equator position and a tread edge, is set to be as small as 5% or less of a tread ground contact width. Such a pneumatic tire of Patent Document 1 tends to have a large ground contact pressure acting on the shoulder land portions. This tendency becomes prominent as rigidity of the shoulder land portions is reduced by the shoulder narrow grooves, and there is a problem that premature wear occurs in the shoulder land portions. A pneumatic tire according to the preamble of claim 1 is disclosed in WO 2015/002096 A1.

### [Related Art]

### [Patent Document]

[Patent Document 1] Japanese Patent Laid-Open Publication No. HEI 9-277804.

### [Summary of the Invention]

### [Problems to Be Solved by the Invention]

The present invention is accomplished in view of the above-described problem and is mainly intended to provide a pneumatic tire that can improve wear resistance of a shoulder land portion while suppressing sideslip on snow and ice based on improving a ratio of a width of a shoulder land portion to a width of a middle land portion, a camber amount at a tread edge, and the like.

### [Means for Solving the Problems]

The present invention provides a pneumatic tire that has a tread part. By providing, in the tread part, a shoulder main groove that continuously extends in a tire circumferential direction on a tread edge side and a center main groove that continuously extends in the tire circumferential direction on a tire axial direction inner side of the shoulder main groove, the tread part is divided into a shoulder land portion on a tire axial direction outer side of the shoulder main groove and a middle land portion between the shoulder main groove and the center main groove. A ratio (W1/W2) of a tire axial direction width (W1) of the shoulder land portion to a tire axial direction width (W2) of the middle land portion is 1.6 - 2.4. A shoulder narrow groove that continuously extends in the tire circumferential direction with a groove width smaller than that of the shoulder main groove is provided in the shoulder land portion on the shoulder main groove side. A first camber amount, which is a tire radial direction distance between a tire equator position and the tread edge in a tread profile in a tire cross section that includes a tire rotation axis in a no-load normal state in which the pneumatic tire is mounted to a normal rim and is filled with air at a normal internal pressure, is 5.3% - 6.5% of a tread ground contact width.

In the pneumatic tire of the present invention, it is desirable that a second camber amount, which is a tire radial direction distance between the tire equator position and a groove center position of the shoulder narrow groove in the tread profile, be 0.5% - 2.5% of the tread ground contact width.

In the pneumatic tire of the present invention, it is desirable that a groove width of the shoulder narrow groove be 0.5% - 1.5% of the tread ground contact width.

In the pneumatic tire of the present invention, it is desirable that a depth of the shoulder narrow groove be 0.34 - 0.47 times a depth of the shoulder main groove.

In the pneumatic tire of the present invention, it is desirable that the shoulder land portion include an inner-side portion between the shoulder main groove and the shoulder narrow groove, and a tire axial direction width of the inner-side portion be 3.3% - 3.9% of the tread ground contact width.

In the pneumatic tire of the present invention, it is desirable that multiple middle transverse grooves that each extend from the shoulder main groove obliquely with respect to the tire axial direction and terminate within the middle land portion are provided in the middle land portion, and the middle transverse grooves include first middle transverse grooves, and second middle transverse grooves that have a tire axial direction length shorter than that of the first middle transverse grooves.

In the pneumatic tire of the present invention, it is desirable that the middle transverse grooves each include an outer-side portion that has a width of 1.0 - 2.5 mm and a groove bottom sipe that extends from a bottom surface of the outer-side portion toward a tire radial direction inner side, and the groove bottom sipe of each of the first middle transverse grooves include a first portion that has a constant depth and a second portion that is gradually reduced in depth from the first portion toward the shoulder main groove.

### [Effect of the Invention]

According to the pneumatic tire of the present invention, the ratio (W1/W2) of the tire axial direction width (W1) of the shoulder land portion to the tire axial direction width (W2) of the middle land portion is 1.6 - 2.4. The shoulder land portion having the width as large as 1.6 - 2.4 times the width of the middle land portion tends to have a higher rigidity than the middle land portion and thus can achieve excellent wear resistance. Further, in the shoulder land portion, on the shoulder main groove side, the shoulder narrow groove that continuously extends in the tire circumferential direction with the groove width smaller than that of the shoulder main groove is provided. When traveling on snow and ice, the shoulder narrow groove provides a large frictional force in the tire axial direction by edges in the shoulder land portion that has a large width, and thus help to prevent sideslip on snow and ice.

In the pneumatic tire of the present invention, the first camber amount, which is the tire radial direction distance between the tire equator position and the tread edge in the tread profile in the tire cross section that includes the tire rotation axis in the no-load normal state in which the pneumatic tire is mounted to a normal rim and is filled with air at a normal internal pressure, is 5.3% - 6.5% of the tread ground contact width.

In general, when the first camber amount is small, a ground contact pressure acting on the shoulder land portion tends to be large. On the other hand, when the first camber amount is large, the ground contact pressure acting on the shoulder land portion tends to decrease and a ground contact pressure acting on the middle land portion tends to increase. In a conventional pneumatic tire, the first camber amount is often set to 5.0% or less of the tread ground contact width. In this case, a relatively large ground contact pressure is likely to act on the shoulder land portion, and thus the shoulder land portion tends to wear out earlier than the middle land portion.

As a result of an intensive research, the present inventors found that an optimal first camber amount for making a wear amount of the shoulder land portion and a wear amount of the middle land portion substantially uniform can vary depending on and has a certain relationship with the ratio of the width of the shoulder land portion to the width of the middle land portion.

In the present invention, the width of the shoulder land portion is specified in the above-described range relative to the width of the middle land portion, and the first camber amount is set to be as large as 5.3% - 6.5% of the tread ground contact width. As a result, distribution of ground contact pressure acting on the shoulder land portion and the middle land portion is optimized and thus progress of wear in both land portions becomes substantially uniform. Therefore, the wear resistance of the shoulder land portion can be improved.

### [Brief Description of the Drawings]

Fig. 1 is a developed view of a tread part of a pneumatic tire of the present embodiment.
Fig. 2 is a cross-sectional view along an A-A line in Fig. 1.
Fig. 3 is an enlarged view of a shoulder land portion of Fig. 1.
Fig. 4 is a cross-sectional view along a B-B line of Fig. 3.
Fig. 5 is a cross-sectional view along a C-C line of Fig. 3.
Fig. 6 is an enlarged view of a middle land portion of Fig. 1.
Fig. 7A is a cross-sectional view along a D-D line of Fig. 6. Fig. 7B is a cross-sectional view along a E-E line of Fig. 6. Fig. 7C is a cross-sectional view along an F-F line of Fig. 6.
Fig. 8 is a developed view of a tread part of a pneumatic tire of Comparative Example 1.

### [Mode for Carrying Out the Invention]

In the following, an embodiment of the present invention is described with reference to the drawings.

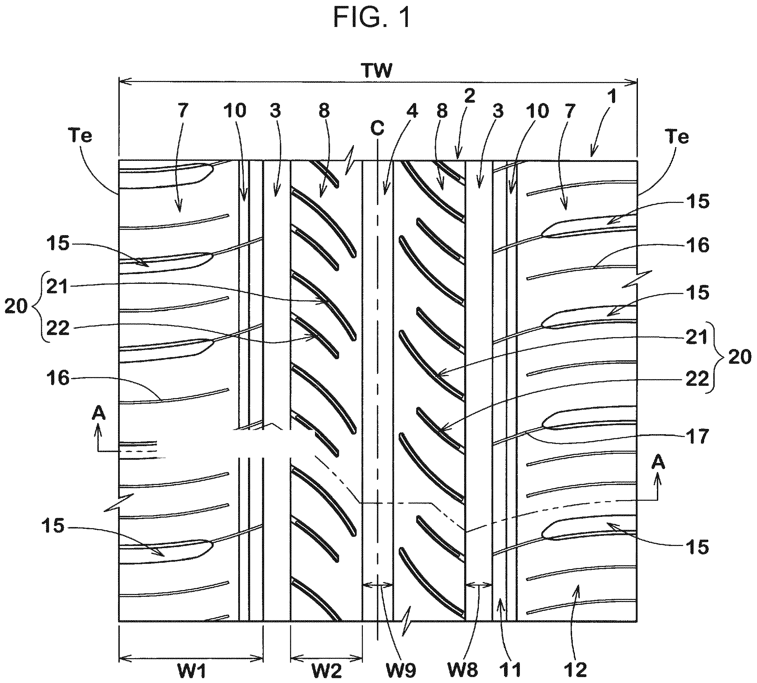

Fig. 1 is a developed view of a tread part 2 of a non-pneumatic tire (hereinafter, may be simply referred to as a "tire") 1 of the present embodiment. The pneumatic tire 1 of the present embodiment is preferably used, for example, for a passenger car.

As illustrated in Fig. 1, in the tread part 2 of the tire 1, a pair of shoulder main grooves 3 and a center main groove 4 that is arranged between the shoulder main grooves 3 are provided.

The shoulder main grooves 3 respectively continuously extend in a tire circumferential direction on tread edge (Te) sides on both sides of a tire equator (C). The shoulder main grooves 3 of the present embodiment, for example, each linearly extend along the tire circumferential direction. It is also possible that the shoulder main grooves 3, for example, each extend in a wavy or zigzag shape.

The term "tread edges (Te)" refers to ground contact positions of tire axial direction outermost sides when the tire 1 in a normal state, in which the tire 1 is mounted to a normal rim (not illustrated in the drawings) and is filled with air at a normal internal pressure and is loaded with no load, is loaded with a normal load and is grounded on a flat surface at an camber angle of 0 degree. In the present specification, unless otherwise specified, values of dimensions of the parts of the tire are values specified in the normal state.

The term "normal rim" refers to a rim for which standards are set for each tire in a system of standards that includes standards on which the tire is based. For example, the term "normal rim" refers to a "Standard Rim" in the JATMA standards, a "Design Rim" in the TRA standards, or a "Measuring Rim" in the ETRTO standards.

The term "normal internal pressure" refers to an air pressure for which standards are set for each tire in a system of standards that includes the standards on which the tire is based, and refers to a "Highest Air Pressure" in the JATMA standards, a maximum value published in the table "Tire Load Limits at Various Cold Inflation Pressures" in the TRA standards, or an "Inflation Pressure" in the ETRTO standards.

The term "normal load" refers to a load for which standards are set for each tire in a system of standards that includes the standards on which the tire is based, and refers to a "Maximum Load Capacity" in the JATMA standards, a maximum value published in the table "Tire Load Limits at Various Cold Inflation Pressures" in the TRA standards, or a "Load Capacity" in the ETRTO standards.

The center main groove 4 is provided on a tire axial direction inner side of the shoulder main grooves 3. The center main groove 4 continuously extends in the tire circumferential direction. The center main groove 4, for example, linearly extends along the tire circumferential direction. In the present embodiment, one center main groove 4 is provided on the tire equator (C). It is also possible that, for example, two center main grooves 4 are respectively provided on both tire axial direction sides of the tire equator (C).

In order to achieve excellent wet performance while maintaining rigidity of the tread part 2, it is desirable that a groove width (W8) of each of the shoulder main grooves 3 and a groove width (W9) of the center main groove 4 be, for example, 3% - 10% of a tread ground contact width (TW). The tread ground contact width (TW) is a tire axial direction distance between the tread edges (Te, Te) of the tire 1 in the normal state.

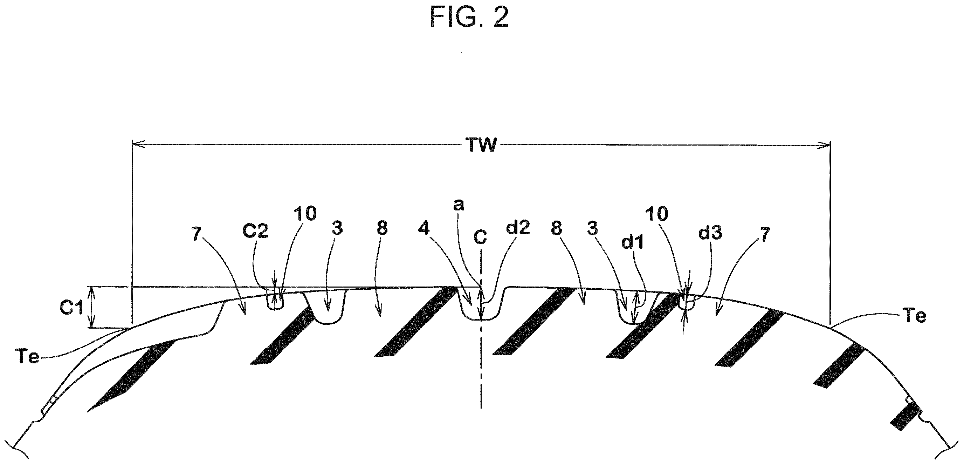

Fig. 2 illustrates a cross-sectional view along an A-A line in Fig. 1. As illustrated in Fig. 2, it is desirable that a depth (d1) of the shoulder main grooves 3 and a depth (d2) of the center main groove 4 be, for example, 5 - 15 mm when the tire is for a passenger car.

As illustrated in Fig. 1, the tread part 2 is divided into a pair of shoulder land portions 7 and a pair of middle land portions 8. The shoulder land portions 7 are respectively provided on tire axial direction outer sides of the shoulder main grooves 3. The middle land portions 8 are respectively provided on both sides of the tire equator (C) between the shoulder main grooves 3 and the center main groove 4. In the tread pattern of the present embodiment, the grooves and the land portions are respectively formed substantially point symmetrical with respect to a point on the tire equator (C). However, the present invention is not necessarily limited to this mode. For example, it is also possible that the tread pattern is structured to be line symmetrical with respect to the tire equator (C).

A ratio (W1/W2) of a tire axial direction width (W1) of each of the shoulder land portions 7 to a tire axial direction width (W2) of each of the middle land portions 8 is in a range of 1.6 - 2.4. Since the shoulder land portions 7 each have a width as large as 1.6 - 2.4 times the width of each of the middle land portions 8, the shoulder land portions 7 have higher rigidity than the middle land portions 8 and thus can achieve excellent wear resistance. When the ratio (W1/W2) is smaller than 1.6, the width (W1) of each of the shoulder land portions 7 becomes relatively small and the wear resistance of the shoulder land portions 7 may decrease. When the ratio (W1/W2) is larger than 2.4, the width (W2) of each of the middle land portions 8 becomes relatively small, which may cause uneven wear in a middle portion of the tread part 2.

It is desirable that the width (W1) of each of the shoulder land portions 7 be, for example, 0.25 - 0.35 times of the tread ground contact width (TW). It is desirable that the width (W2) of each of the middle land portions 8 be, for example, 0.10 - 0.20 times of the tread ground contact width (TW).

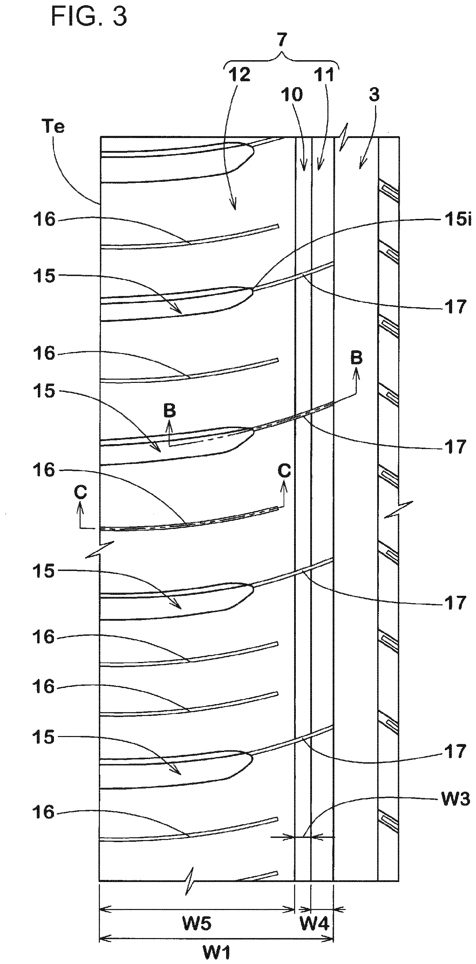

Fig. 3 illustrates an enlarged view of a shoulder land portion 7. As illustrated in Fig. 3, in each of the shoulder land portions 7, on a shoulder main groove 3 side, a shoulder narrow groove 10 that continuously extends in the tire circumferential direction with a groove width (W3) smaller than the groove width (W8) of each of the shoulder main grooves 3 is provided. The shoulder narrow grooves 10 of the present embodiment, for example, each linear extend. However, without being limited to this, it is also possible that the shoulder narrow grooves 10 each extend in a zigzag or wavy shape.

When traveling on snow and ice, edges of the shoulder narrow grooves 10 provide a large frictional force in the tire axial direction to the shoulder land portions 7 that each have a large width, and thus help to prevent sideslip on snow and ice. More detailed structures of the shoulder narrow grooves 10 and the shoulder land portions 7 will be described later.

Fig. 2 illustrates a tread profile in a tire cross section including a tire rotation axis in a no-load normal state in which the tire is mounted to a normal rim and is filled with air at a normal internal pressure. Here, in the present invention, a first camber amount (C1), which is a tire radial direction distance between a tire equator position (a) and a tread edge (Te), is set to 5.3% - 6.5% of the tread ground contact width (TW). The term "tread profile" means an outer contour line of the tread part 2 in a state in which the grooves provided in the tread part 2 are filled so as to be smoothly continuous with tread surfaces of the land portions.

In general, when the first camber amount (C1) is small, a ground contact pressure acting on the shoulder land portions 7 tends to be large. On the other hand, when the first camber amount (C1) is large, the ground contact pressure acting on the shoulder land portions 7 tends to decrease and a ground contact pressure acting on the middle land portions 8 tends to increase. In a conventional pneumatic tire, the first camber amount (C1) is often set to 5.0% or less of the tread ground contact width (TW). In this case, a relatively large ground contact pressure is likely to act on the shoulder land portions 7, and thus the shoulder land portions 7 tend to wear out earlier than the middle land portions 8.

As a result of an intensive research, the present inventors found that an optimal first camber amount (C1) for making a wear amount of the shoulder land portions 7 and a wear amount of the middle land portions 8 substantially uniform can vary depending on and has a certain relationship with the ratio of the width (W1) of each of the shoulder land portions 7 to the width (W2) of each of the middle land portions 8.

In the present invention, by specifying the width (W1) of each of the shoulder land portions 7 in the above-described range and setting the first camber amount (C1) to 5.3% - 6.5% of the tread ground contact width (TW), which is larger than that in a conventional tire, the ground contact pressure acting on the shoulder land portions 7 can be appropriately dispersed to the middle land portions 8 side. Therefore, the wear resistance of the shoulder land portions 7 can be improved.

In order to further enhance the above-described effect, it is desirable that the first camber amount (C1) be, for example, 5.6% - 6.2% of the tread ground contact width (TW).

In the tread profile, a second camber amount (C2), which is a tire radial direction distance between the tire equator position (a) and a groove center position of a shoulder narrow groove 10, is preferably 0.5% or more and 2.5% or less of the tread ground contact width (TW), and more preferably 1.0% or more and 2.0% or less of the tread ground contact width (TW). By setting the second camber amount (C2) to such a small value, a ground contact pressure acting on a tire axial direction inner side of the shoulder land portions 7 can be appropriately ensured. When the second camber amount (C2) is less than 0.5% of the tread ground contact width (TW), the ground contact pressure acting on the shoulder land portions 7 may become excessively large. When the second camber amount (C2) is larger than 2.5% of the tread ground contact width (TW), the ground contact pressure acting one the tire axial direction inner side of the shoulder land portions 7 may be excessively small.

In order to achieve excellent performance on snow and ice while maintaining the rigidity of the shoulder land portions 7, a depth (d3) of the shoulder narrow grooves 10 is preferably 0.34 or more and 0.47 or less times the depth (d1) of the shoulder main grooves 3, and more preferably 0.38 or more and 0.42 or less times the depth (d1) of the shoulder main grooves 3.

In order to achieve both good steering stability on a dry road surface and good performance on snow and ice in a well-balanced manner, as illustrated in Fig. 3, it is desirable that the groove width (W3) of each of the shoulder narrow grooves 10 be, for example, 0.5% - 1.5% of the tread ground contact width (TW) (illustrated in Fig. 1; the same applies hereinafter).

Each of the shoulder land portions 7 includes an inner-side portion 11 that is positioned on a tire axial direction inner side of the shoulder narrow groove 10 and an outer-side portion 12 that is positioned on a tire axial direction outer side of the shoulder narrow groove 10.

In the inner-side portion 11, for example, only sipes are provided, and transverse grooves for drainage are not provided. In the present specification, the term "sipe" means a slit having a width of 1.5 mm or less. When traveling on snow and ice, the inner-side portion 11 provides a large frictional force in the tire axial direction due to edges.

In order to achieve both good performance on snow and ice and good wear resistance of the shoulder land portions 7, it is desirable that a tire axial direction width (W4) of the inner-side portion 11 be, for example, 0.05 - 0.15 times the width (W1) of each of the shoulder land portions 7.

The outer-side portion 12, for example, has a width (W5) that is larger than the width (W4) of the inner-side portion 11. Specifically, it is desirable that the width (W5) of the outer-side portion 12 be, for example, 0.80 - 0.90 times the width (W1) of each of the shoulder land portions 7.

In each of the shoulder land portions 7, for example, multiple shoulder lug grooves 15 are provided at intervals along the tire circumferential direction and shoulder sipes 16 are respectively provided between the shoulder lug grooves 15.

The shoulder lug grooves 15 each extend at least from a tread edge (Te) toward a tire axial direction inner side. The shoulder lug grooves 15 each terminate without reaching the shoulder narrow groove 10. Such shoulder lug grooves 15 improve wet performance and performance on snow while maintaining the rigidity of the shoulder land portions 7 on an tire axial direction inner side.

It is desirable that connection sipes 17 be respectively provided on tire axial direction inner sides of the shoulder lug grooves 15, the connection sipes 17 respectively extending from inner ends (15i) of the shoulder lug grooves 15 across the respective shoulder narrow grooves 10 to reach the respective shoulder main grooves 3. Such connection sipes 17 suppress a strain of a ground contact portion of tire axial direction inner sides of the shoulder lug grooves 15 during traveling, and suppress uneven wear thereof.

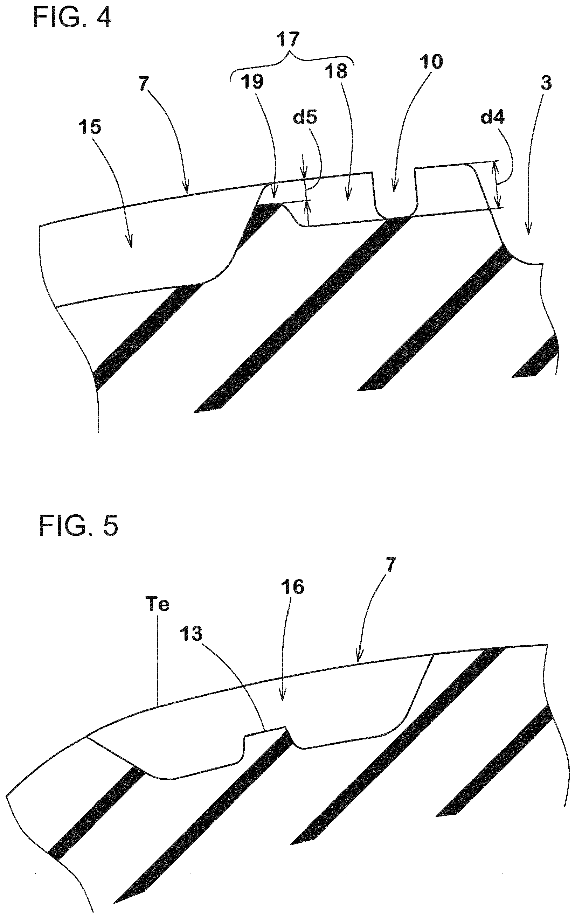

Fig. 4 illustrates a cross-sectional view of a B-B line along a length direction of a connection sipe 17 and a shoulder lug groove 15 of Fig. 3. As illustrated in Fig. 4, the connection sipe 17 includes a first portion 18 on a shoulder main groove 3 side, and a second portion 19 of which a bottom surface is raised higher than the first portion 18 on a tread edge (Te) side. Such connection sipes 17 suppress uneven wear of the shoulder land portions 7 near the inner ends of the shoulder lug grooves 15.

The first portion 18, for example, has a substantially constant depth (d4) and extends across the shoulder narrow groove 10. The depth (d4) of the first portion 18 is, for example, 2.5 - 3.5 mm. As a desirable mode, the first portion 18 has a depth equal to that of the shoulder narrow groove 10. This allows the steering stability on a dry road surface and performance on snow to be improved in a well-balanced manner.

The second portion 19 is provided between the first portion 18 and the shoulder lug groove 15. A depth (d5) of the second portion 19 is, for example, 0.40 - 0.60 times the depth (d4) of the first portion 18. Such a second portion 19 helps to increase the steering stability on a dry road surface while maintaining water absorption performance of the connection sipe 36.

As illustrated in Fig. 3, one or two shoulder sipes 16, for example, are provided between shoulder lug grooves 15, 15 that are adjacent to each other in the tire circumferential direction. The shoulder sipes 16 extends, for example, substantially parallel to the shoulder lug grooves 15.

The shoulder sipes 16, for example, each extend at least from a tread edge (Te) toward a tire axial direction inner side. The shoulder sipes 16, for example, each terminate without reaching the shoulder narrow groove 10. Such shoulder sipes 16 can maintain the rigidity of the shoulder land portions 7 and effectively improve the steering stability on a dry road surface and the wear resistance of the shoulder land portions 7.

Fig. 5 illustrates a cross-sectional view of a C-C line along a length direction of a shoulder sipe 16 of Fig. 3. As illustrated in Fig. 5, the shoulder sipe 16, for example, has a raised portion 13 of which a bottom surface is partially raised. Such a raised portion 13 can suppress opening of the shoulder sipe 16 and can enhance an edge effect thereof.

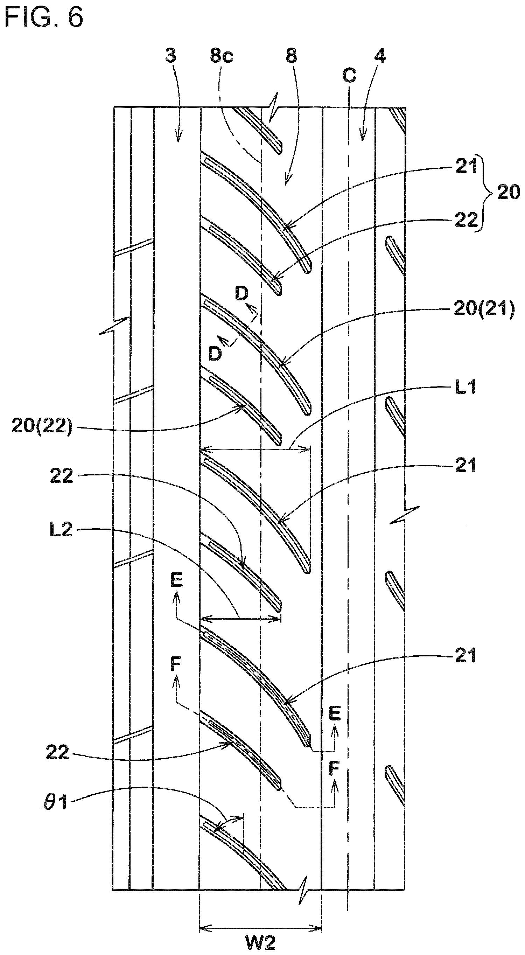

Fig. 6 illustrates an enlarged view of a middle land portion 8. As illustrated in Fig. 6, the tire axial direction width (W2) of the middle land portion 8, for example, is 0.15 - 0.20 times of the tread ground contact width (TW).

Multiple middle transverse grooves 20 are provided in the middle land portion 8. As a desirable mode, the middle land portion 8 is a rib that continuously extends in the tire circumferential direction in which there are no grooves for drainage other than the middle transverse grooves 20.

The middle transverse grooves 20 each extend from a shoulder main groove 3 obliquely with respect to the tire axial direction and terminate within the middle land portion 8. Such middle transverse grooves 20 each do not completely divide the middle land portion 8 and thus can maintain the rigidity of the middle land portion 8 and can improve the steering stability on a dry road surface.

The middle transverse grooves 20, for example, are inclined at an angle (θ1) of 35 - 65 degrees with respect to the tire circumferential direction. Such middle transverse grooves 20 achieve an edge effect in the tire circumferential direction and in the tire axial direction and improve the performance on snow and ice. As a desirable mode, for example, the angle (θ1) of the middle transverse grooves 20 with respect to the tire circumferential direction gradually decreases toward a tire axial direction inner side. Such middle transverse grooves 20 increase an edge component in the tire circumferential direction on a tire axial direction inner side where a large ground contact pressure acts. This effectively increases a frictional force in the tire axial direction on snow and ice.

It is desirable that the middle transverse grooves 20 each terminate, for example, on a tire axial direction inner side beyond a width direction center (8c) of the middle land portion 8. As a result, the edge component of the middle transverse grooves 20 increases and the performance on snow is further improved.

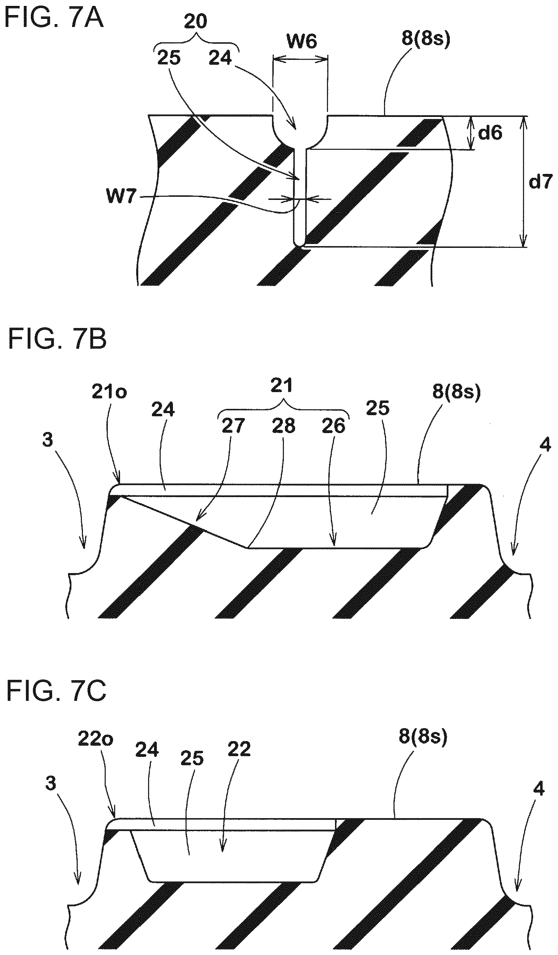

Fig. 7A illustrates a cross-sectional view along a D-D line orthogonal to a length direction of a middle transverse groove 20 of Fig. 6. As illustrated in Fig. 7A, the middle transverse groove 20, for example, has an outer-side portion 24 that opens on a tread surface side with a width (W6) of 1.0 - 2.5 mm and a groove bottom sipe 25 that extends from a bottom surface of the outer-side portion 24 toward a tire radial direction inner side. The middle transverse grooves 20 having such groove bottom sipes 25 can improve the wet performance while maintaining the rigidity of the middle land portions 8.

The outer-side portion 24, for example, has an arc-shaped contour that is convex toward a tire radial direction inner side in a cross section orthogonal to a length direction of the middle transverse groove 20. It is desirable that a depth (d6) of the outer-side portion 24, for example, be 0.5 - 1.5 mm.

In the present embodiment, a width (W7) of the groove bottom sipe 25 is preferably 0.3 - 0.7 mm. A depth (d7) from a tread surface (8s) of the middle land portion 8 to a bottom (25d) of the groove bottom sipe 25, for example, is 4.5 - 6.0 mm, and more preferably 5.0 - 5.5 mm. Such groove bottom sipes 25 can suppress a strain of ground contact surfaces of the middle land portions 8 and can suppress uneven wear thereof while maintaining the rigidity of the middle land portions 8.

As illustrated in Fig. 6, middle transverse grooves 20 include first middle transverse grooves 21, and second middle transverse grooves 22 that have a tire axial direction length shorter than that of the first middle transverse grooves 21. It is desirable that the first middle transverse grooves 21 and the second middle transverse grooves 22, for example, are alternately provided in the tire circumferential direction.

A tire axial direction length (L1) of each of the first middle transverse grooves 21 is preferably 0.50 or more and 0.95 or less times of the tire axial direction width (W2) of each of the middle land portions 8 and more preferably 0.70 or more and 0.90 or less times the tire axial direction width (W2) of each of the middle land portions 8.

Fig. 7B illustrates a cross-sectional view of a E-E line along a length direction of a first middle transverse groove 21 of Fig. 6. As illustrated in Fig. 7B, the first middle transverse grooves 21 each have a first portion 26 that has a substantially constant depth, and a second portion 27 that is gradually reduced in depth from the first portion 26 toward a shoulder main groove 3 side. Such first middle transverse grooves 21 help maintain rigidity of tire axial direction outer sides of the middle land portions 8 and maintain the steering stability on a dry road surface.

It is desirable that a boundary 28 between the first portion 26 and the second portion 27 be positioned on a tire axial direction outer side beyond the width direction center (8c) (illustrated in Fig. 6) of the middle land portion 8. Such a first portion 26 and a second portion 27 ensure a volume of the first middle transverse groove 21 and improve the water absorption performance of the sipes.

As particularly preferable mode, an outer end (21o) of the first middle transverse groove 21 is formed by the outer-side portion 24 only. That is, it is desirable that, while being gradually reduced in depth toward the tire axial direction outer side, the groove bottom sipe 25 of the first middle transverse groove 21 terminate before the shoulder main groove 3 without being communicatively connected to the shoulder main groove 3. Such first middle transverse grooves 21 can maintain the rigidity of the tire axial direction outer sides of the middle land portions 8 and suppress uneven wear thereof.

As illustrated in Fig. 6, a tire axial direction length (L2) of each of the second middle transverse grooves 22 is preferably 0.65 or more and 0.85 or less times of the tire axial direction length (L1) of each of the first middle transverse grooves 21, and more preferably 0.70 or more and 0.80 or less times the axial direction length (L1) of each of the first middle transverse grooves 21. Such first middle transverse grooves 21 and second middle transverse grooves 22 improve the steering stability on a dry road surface and the performance on snow and ice in a well-balanced manner.

Fig. 7C illustrates a cross-sectional view of an F-F line along a length direction of a second middle transverse groove 22 of Fig. 6. As illustrated in Fig. 7C, the second middle transverse groove 22 has a bottom surface that extends in the tire axial direction at a substantially constant depth. Such second middle transverse grooves 22 suppress a strain of a ground contact portion of the middle land portions 8, and suppress uneven wear thereof.

As particularly preferable mode, an outer end (22o) of the second middle transverse groove 22 is formed by the outer-side portion 24 only. That is, it is desirable that the groove bottom sipe 25 of the second middle transverse groove 22 terminate before the shoulder main groove 3 without being communicatively connected to the shoulder main groove 3. Such second middle transverse grooves 22 can maintain the rigidity of the tire axial direction outer sides of the middle land portions 8 and suppress uneven wear thereof.

In the above, the pneumatic tire of the embodiment of the present invention is described in detail. However, without being limited to the above-described specific embodiment, the present invention can also be embodied in various modified forms.

### [Examples]

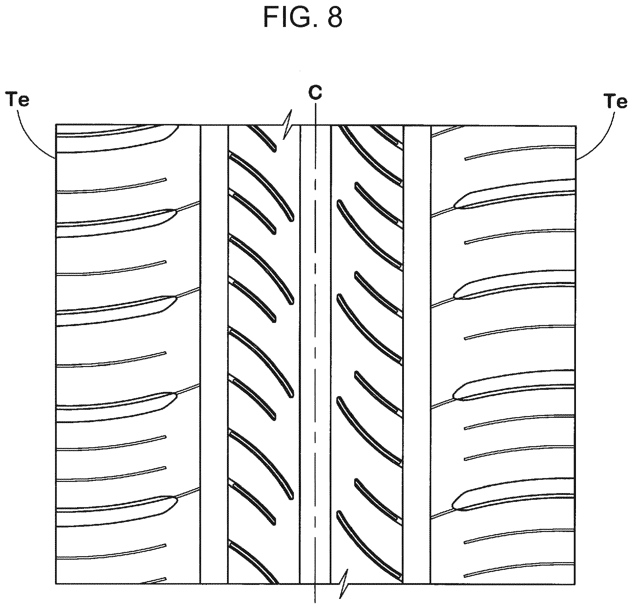

Pneumatic tires each having the basic pattern of Fig. 1 were prototyped based on specifications shown in Table 1. As Comparative Example 1, as illustrated in Fig. 8, a tire that does not have shoulder narrow grooves was prototyped, for each of the test tires, steering stability on a dry road surface, performance on snow and ice, and a wear amount of a shoulder portion were tested. Common specifications of the test tires are as follows.
Tire size: 185/65R15
Rim size: 15×6.0J
Tire internal pressure: front wheel: 220 kPa; rear wheel: 210 kPa
Tread ground contact width (TW): 132 mm
Groove width (W8) of shoulder main grooves and groove width (W9) of center main groove: 9.0 mm
Depth (d1) of shoulder main grooves and depth (d2) of center main groove: 7.4 mm

A test method is as follows.

### <Steering Stability on Dry Road Surface>

Steering stability when driving the following test vehicle on a test course of a dry road surface was evaluated by the driver based on a sensory evaluation. The result is a score with a result of Comparative Example 1 as 100. A larger score indicates a better steering stability.
Test vehicle: displacement: 1300 cc; front wheel drive
Test tire mounting positions: all wheels

### <Performance on Snow and Ice>

Performance on snow and ice when driving the test vehicle on snow and ice with chains installed on the front wheels of the test vehicle was evaluated by the driver based sensory evaluation. The result is a score with a result of Comparative Example 1 as 100. A larger score indicates that occurrence of sideslip is less frequent and the performance on snow and ice is superior.

### <Wear Amount of Shoulder Land Portions>

After the test vehicle was driven a predetermined distance on a dry road surface, a wear amount of a shoulder land portion was measured. The result is an index number with a wear amount of a shoulder land portion of Comparative Example 1 as 100. A smaller index number indicates that the wear amount of the shoulder land portion is smaller.

The test results are shown in Table 1.

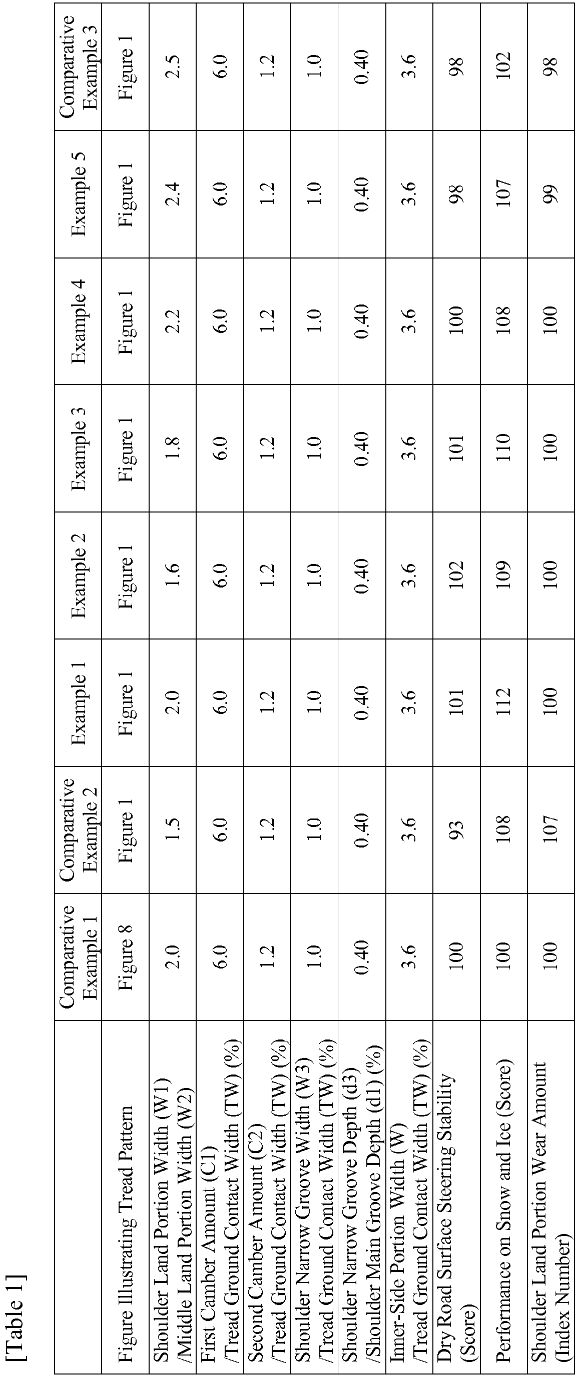

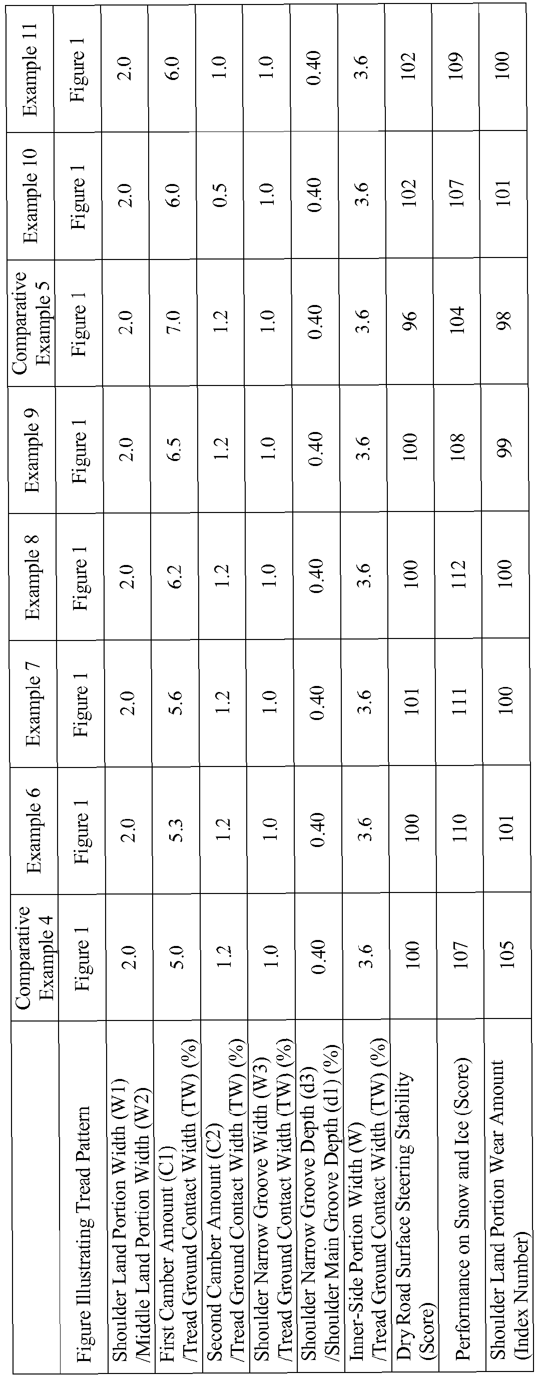

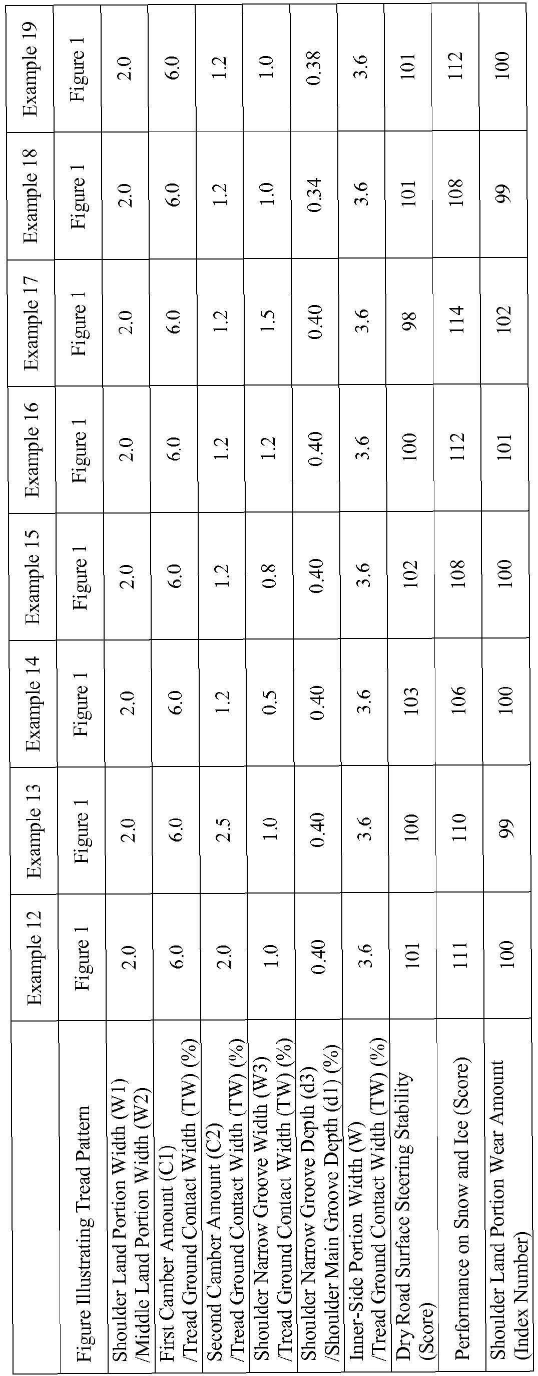

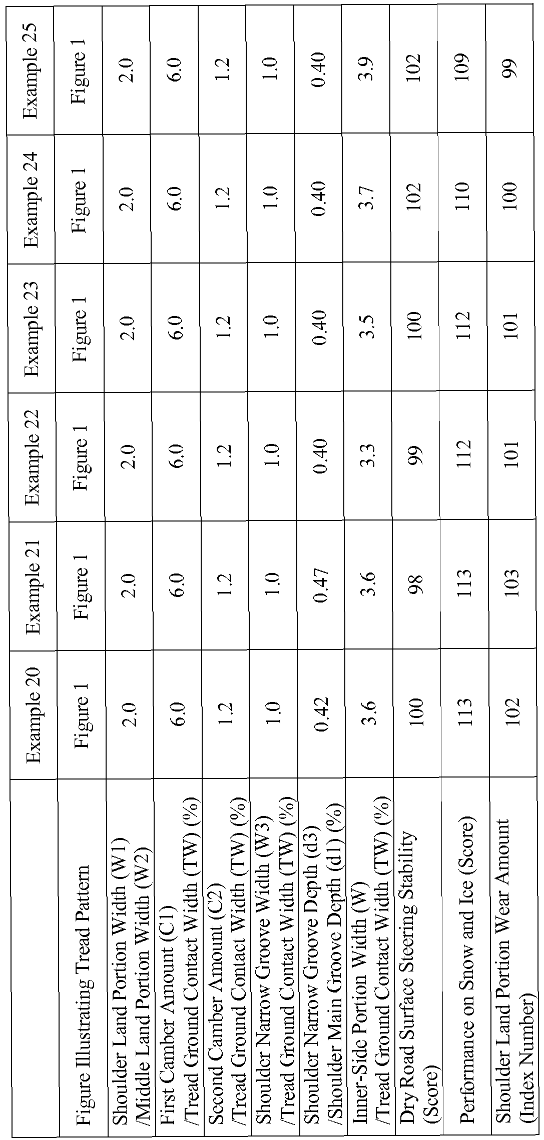

As a result of the tests, it was confirmed that the pneumatic tires of Examples allowed the performance on snow and ice and the durability of the shoulder land portions to be improved.

### [Description of Reference Numerals]

2: tread part
3: shoulder main grooves
4: center main groove
7: shoulder land portions
8: middle land portions
10: shoulder narrow grooves
TW: tread ground contact width
Te: tread edges
W1: tire axial direction width of each shoulder land portion
W2: tire axial direction width of each middle land portions
C1: first camber amount

## Claims

1. A pneumatic tire (1) comprising a tread part (2), wherein
by providing, in the tread part (2), a shoulder main groove (3) that continuously extends in a tire circumferential direction on a tread edge (Te) side and a center main groove (4) that continuously extends in the tire circumferential direction on a tire axial direction inner side of the shoulder main groove (3), the tread part (2) is divided into a shoulder land portion (7) on a tire axial direction outer side of the shoulder main groove (3) and a middle land portion (8) between the shoulder main groove (3) and the center main groove (4),
a shoulder narrow groove (10) that continuously extends in the tire circumferential direction with a groove width (W3) smaller than that of the shoulder main groove (3) is provided in the shoulder land portion (7) on the shoulder main groove side,
a ratio (W1/W2) of a tire axial direction width (W1) of the shoulder land portion (7) to a tire axial direction width (W2) of the middle land portion (8) is 1.6 - 2.4, **characterised in that** a first camber amount (C1), which is a tire radial direction distance between a tire equator position (a) and the tread edge (Te) in a tread profile in a tire cross section that includes a tire rotation axis in a no-load normal state in which the pneumatic tire (1) is mounted to a normal rim and is filled with air at a normal internal pressure, is 5.3% - 6.5% of a tread ground contact width (TW),
wherein the tread edge (Te) refers to the ground contact position of the tire axial direction outermost side when the tire in the no-load normal state is loaded with a normal load and is grounded on a flat surface at a camber angle of 0 degree.

2. The pneumatic tire (1) according to claim 1, wherein a second camber amount (C2), which is a tire radial direction distance between the tire equator position (a) and a groove center position of the shoulder narrow groove (10) in the tread profile, is 0.5% - 2.5% of the tread ground contact width (TW).

3. The pneumatic tire (1) according to any one of claims 1 and 2, wherein a groove width (W3) of the shoulder narrow groove (10) is 0.5% - 1.5% of the tread ground contact width (TW).

4. The pneumatic tire (1) according to any one of claims 1 - 3, wherein a depth (d3) of the shoulder narrow groove (10) is 0.34 - 0.47 times a depth of the shoulder main groove (3).

5. The pneumatic tire (1) according to any one of claims 1 - 4, wherein
the shoulder land portion (7) includes an inner-side portion (11) between the shoulder main groove (3) and the shoulder narrow groove (10), and
a tire axial direction width of the inner-side portion (11) is 3.3% -- 3.9% of the tread ground contact width (TW).

6. The pneumatic tire (1) according to any one of claims 1 - 5, wherein
multiple middle transverse grooves (20) that each extend from the shoulder main groove (3) obliquely with respect to the tire axial direction and terminate within the middle land portion (8) are provided in the middle land portion (8), and
the middle transverse grooves (20) include first middle transverse grooves (21), and second middle transverse grooves (22) that have a tire axial direction length shorter than that of the first middle transverse grooves (21).

7. The pneumatic tire (1) according to claim 6, wherein
the middle transverse grooves (20) each include an outer-side portion (24) that has a width (W6) of 1.0 - 2.5 mm and a groove bottom sipe (25) that extends from a bottom surface of the outer-side portion (24) toward a tire radial direction inner side, and
the groove bottom sipe (25) of each of the first middle transverse grooves (21) includes a first portion (26) that has a constant depth and a second portion (27) that is gradually reduced in depth from the first portion (26) toward the shoulder main groove (3).

8. The pneumatic tire (1) according to Claim 1, wherein the shoulder land portion (7) has a plurality of shoulder lug grooves (15) formed at intervals along the tire circumferential direction such that each of the shoulder lug grooves (15) is extending at least from a tread edge (Te) toward a tire axial direction inner side and terminated without reaching the shoulder narrow groove (10), and the shoulder lug grooves (15) has a plurality of connection sipes (17) on tire axial direction inner sides of the shoulder lug grooves (15) respectively such that the plurality of connection sipes (17) is extending from inner ends (15i) of the shoulder lug grooves (15) across the shoulder narrow groove (10) to reach the shoulder main groove (3) and that each of the connection sipes (17) includes a first portion (18) on a shoulder main groove side, and a second portion (19) having a bottom surface which is raised higher than the first portion (18) on the tread edge (Te) side.

9. The pneumatic tire (1) according to Claim 8, wherein each of the connection sipes (17) is formed such that the second portion (19) is formed between the first portion (18) and the shoulder lug groove (15) such that a depth (d5) of the second portion (19) is in a range of 0.40 to 0.60 times a depth (d4) of the first portion (18).

10. The pneumatic tire (1) according to Claim 8, wherein the shoulder land portion (7) has at least one shoulder sipe (16) formed between adjacent shoulder lug grooves (15) in the tire circumferential direction such that the shoulder sipe (16) is extending substantially parallel to the shoulder lug grooves (15) at least from the tread edge (Te) toward the tire axial direction inner side.

11. The pneumatic tire (1) according to Claim 8, wherein the shoulder land portion (7) has at least one shoulder sipe (16) formed between adjacent shoulder lug grooves (15) in the tire circumferential direction such that the shoulder sipe (16) is extending substantially parallel to the shoulder lug grooves (15) at least from the tread edge (Te) toward the tire axial direction inner side and terminated without reaching the shoulder narrow groove (10).

12. The pneumatic tire (1) according to Claim 10, wherein the shoulder sipe (16) has a raised portion (13) having a partially raised bottom surface.

13. The pneumatic tire (1) according to any one of Claims 1 - 7, wherein the middle land portion (8) has a plurality of middle transverse grooves (20) such that each of the middle transverse grooves (20) is extending from the shoulder main groove (3) obliquely with respect to the tire axial direction and terminated within the middle land portion (8).

14. The pneumatic tire (1) according to Claim 13, wherein the middle transverse grooves (20) are inclined at an angle θ1 in a range of 35 to 65 degrees with respect to the tire circumferential direction.

15. The pneumatic tire (1) according to any one of Claims 1 - 7, wherein the middle land portion (8) has a plurality of middle transverse grooves (20) such that each of the middle transverse grooves (20) is extending from the shoulder main groove (3) obliquely with respect to the tire axial direction and terminated on the tire axial direction inner side beyond a width direction center of the middle land portion (8).

## Patentansprüche

1. Luftreifen (1), der einen Laufflächenteil (2) umfasst, wobei
durch Bereitstellen, in dem Laufflächenteil (2), einer Schulterhauptrille (3), die sich durchgehend in einer Reifenumfangsrichtung auf einer Seite der Laufflächenkante (Te) erstreckt, und einer zentralen Hauptrille (4), die sich durchgehend in der Reifenumfangsrichtung auf einer Innenseite in der Reifenaxialrichtung der Schulterhauptrille (3) erstreckt, der Laufflächenteil (2) in einen Schulterlandabschnitt (7) auf einer Außenseite in einer Reifenaxialrichtung der Schulterhauptrille (3) und einen mittleren Landabschnitt (8) zwischen der Schulterhauptrille (3) und der zentralen Hauptrille (4) unterteilt ist,
eine Schulterschmalrille (10), die sich durchgehend in der Reifenumfangsrichtung mit einer Rillenbreite (W3) erstreckt, die kleiner ist als die der Schulterhauptrille (3), in dem Schulterlandabschnitt (7) auf der Seite der Schulterhauptrille vorgesehen ist,
ein Verhältnis (W1/W2) einer Reifenaxialrichtungsbreite (W1) des Schulterlandabschnitts (7) zu einer Reifenaxialrichtungsbreite (W2) des mittleren Landabschnitts (8) 1,6 bis 2,4 beträgt,
**dadurch gekennzeichnet, dass**
ein erster Überhöhungsbetrag (C1), der ein Reifenradialrichtungsabstand zwischen einer Reifenäquatorposition (a) und der Laufflächenkante (Te) in einem Laufflächenprofil in einem eine Reifendrehachse umfassenden Reifenquerschnitt ist, in einem normalen Zustand ohne Last, in welchem der Luftreifen (1) auf eine normale Felge aufgezogen und mit Luft mit einem normalen Innendruck befüllt ist, 5,3% bis 6,5% einer Laufflächenbodenkontaktbreite (TW) beträgt,
wobei sich die Laufflächenkante (Te) auf die Bodenkontaktposition der am weitesten außen liegenden Seite in der Reifenaxialrichtung bezieht, wenn der Reifen in dem normalen Zustand ohne Last mit einer normalen Last belastet und auf einer ebenen Oberfläche mit einem Überhöhungsbetrag von 0 Grad am Boden ist.

2. Luftreifen (1) nach Anspruch 1, wobei ein zweiter Überhöhungsbetrag (C2), der ein Reifenradialrichtungsabstand zwischen der Reifenäquatorposition (a) und einer Rillenzentrumsposition der Schulterschmalrille (10) in dem Laufflächenprofil ist, 0,5% bis 2,5% der Laufflächenbodenkontaktbreite (TW) beträgt.

3. Luftreifen (1) nach einem der Ansprüche 1 und 2, wobei eine Rillenbreite (W3) der Schulterschmalrille (10) 0,5% bis 1,5% der Laufflächenbodenkontaktbreite (TW) beträgt.

4. Luftreifen (1) nach einem der Ansprüche 1 bis 3, wobei eine Tiefe (d3) der Schulterschmalrille (10) das 0,34- bis 0,47-fache einer Tiefe der Schulterhauptrille (3) beträgt.

5. Luftreifen (1) nach einem der Ansprüche 1 bis 4, wobei
der Schulterlandabschnitt (7) einen Innenseitenabschnitt (11) zwischen der Schulterhauptrille (3) und der Schulterschmalrille (10) umfasst, und
eine Reifenaxialrichtungsbreite des Innenseitenabschnitts (11) 3,3% bis 3,9% einer Laufflächenbodenkontaktbreite (TW) beträgt.

6. Luftreifen (1) nach einem der Ansprüche 1 bis 5, wobei
mehrere mittlere Querrillen (20), die sich jeweils von der Schulterhauptrille (3) schräg mit Bezug auf die Reifenaxialrichtung erstrecken und innerhalb des mittleren Landabschnitts (8) enden, in dem mittleren Landabschnitt (8) vorgesehen sind, und
die mittleren Querrillen (20) erste mittlere Querrillen (21) und zweite mittlere Querrillen (22) umfassen, die eine Reifenaxialrichtungslänge aufweisen, die kürzer ist als die der ersten mittleren Querrillen (21).

7. Luftreifen (1) nach Anspruch 6, wobei
die mittleren Querrillen (20) jeweils einen Außenseitenabschnitt (24) mit einer Breite (W6) von 1,0 bis 2,5 mm und einen Rillengrundfeinschnitt (25) umfassen, der sich von einer Grundfläche des Außenseitenabschnitts (24) zu einer Innenseite in einer Reifenradialrichtung erstreckt, und
der Rillengrundfeinschnitt (25) einer jeden der ersten mittleren Querrillen (21) einen ersten Abschnitt (26), der eine konstante Tiefe aufweist, und einen zweiten Abschnitt (27) umfasst, dessen Tiefe von dem ersten Abschnitt (26) zu der Schulterhauptrille (3) allmählich verringert ist.

8. Luftreifen (1) nach Anspruch 1, wobei der Schulterlandabschnitt (7) eine Mehrzahl von Schulterstollenrillen (15) aufweist, die in Intervallen entlang der Reifenumfangsrichtung gebildet sind, so dass eine jede der Schulterstollenrillen (15) sich zumindest von einer Laufflächenkante (Te) zu einer Innenseite in der Reifenaxialrichtung erstreckt und endet, ohne die Schulterschmalrille (10) zu erreichen, und die Schulterstollenrille (15) jeweils eine Mehrzahl von Verbindungsfeinschnitten (17) auf Innenseiten in der Reifenaxialrichtung der Schulterstollenrillen (15) aufweisen, so dass die Mehrzahl von Verbindungsfeinschnitten (17) sich von Innenenden (15i) der Schulterstollenrillen (15) über die Schulterschmalrille (10) hinweg erstreckt, so dass sie die Schulterhauptrille (3) erreichen, und dass ein jeder der Verbindungsfeinschnitte (17) einen ersten Abschnitt (18) auf einer Seite der Schulterhauptrille und einen zweiten Abschnitt (19) umfasst, der eine Grundfläche aufweist, die höher erhaben ist als der erste Abschnitt (18) auf der Seite der Laufflächenkante (Te).

9. Luftreifen (1) nach Anspruch 8, wobei ein jeder der Verbindungsfeinschnitte (17) derart gebildet ist, dass der zweite Abschnitt (19) zwischen dem ersten Abschnitt (18) und der Schulterstollenrille (15) gebildet ist, so dass eine Tiefe (d5) des zweiten Abschnitts (19) in einem Bereich vom 0,40- bis 0,60-fachen einer Tiefe (d4) des ersten Abschnitts (18) liegt.

10. Luftreifen (1) nach Anspruch 8, wobei der Schulterlandabschnitt (7) zumindest einen Schulterfeinschnitt (16) aufweist, der zwischen benachbarten Schulterstollenrillen (15) in der Umfangsrichtung des Reifens gebildet ist, so dass der Schulterfeinschnitt (16) sich im Wesentlichen parallel zu den Schulterstollenrillen (15) zumindest von der Laufflächenkante (Te) zu der Innenseite in der Reifenaxialrichtung hin erstreckt.

11. Luftreifen (1) nach Anspruch 8, wobei der Schulterlandabschnitt (7) zumindest einen Schulterfeinschnitt (16) aufweist, der zwischen benachbarten Schulterstollenrillen (15) in der Reifenumfangsrichtung gebildet ist, so dass der Schulterfeinschnitt (16) sich im Wesentlichen parallel zu den Schulterstollenrillen (15) zumindest von der Laufflächenkante (Te) zu der Innenseite in der Reifenaxialrichtung hin erstreckt und endet, ohne die Schulterschmalrille (10) zu erreichen.

12. Luftreifen (1) nach Anspruch 10, wobei der Schulterfeinschnitt (16) einen erhabenen Abschnitt (13) mit einer teilweise erhabenen Grundfläche aufweist.

13. Luftreifen (1) nach einem der Ansprüche 1 bis 7, wobei der mittlere Landabschnitt (8) eine Mehrzahl von mittleren Querrillen (20) aufweist, so dass sich eine jede der mittleren Querrillen (20) von der Schulterhauptrille (3) schräg mit Bezug auf die Reifenaxialrichtung erstreckt und innerhalb des mittleren Landabschnitts (8) endet.

14. Luftreifen (1) nach Anspruch 13, wobei die mittleren Querrillen (20) unter einem Winkel θ1 in einem Bereich von 35 bis 65 Grad mit Bezug auf die Reifenumfangsrichtung geneigt sind.

15. Luftreifen (1) nach einem der Ansprüche 1 bis 7, wobei der mittlere Landabschnitt (8) eine Mehrzahl von mittleren Querrillen (20) umfasst, so dass eine jede der mittleren Querrillen (20) sich von der Schulterhauptrille (3) schräg mit Bezug auf die Reifenaxialrichtung erstreckt und auf der Innenseite in der Reifenaxialrichtung jenseits eines Zentrums in der Breitenrichtung des mittleren Landabschnitts (8) endet.

## Revendications

1. Bandage pneumatique (1) comprenant une partie formant bande de roulement (2), dans lequel
en prévoyant, dans la partie formant bande de roulement (2), une rainure principale d'épaulement (3) qui s'étend en continu dans une direction circonférentielle du pneumatique sur un côté vers le bord de roulement (Te) et une rainure principale centrale (4) qui s'étend en continu dans la direction circonférentielle du pneumatique sur un côté intérieur, en direction axiale du pneumatique, de la rainure principale d'épaulement (3), la partie formant bande de roulement (2) est divisée en une région en relief d'épaulement (7) sur un côté extérieur, en direction axiale du pneumatique, de la rainure principale d'épaulement (3), et en une portion en relief médiane (8) entre la rainure principale d'épaulement (3) et la rainure principale centrale (4),
une rainure étroite d'épaulement (10) qui s'étend en continu dans la direction circonférentielle du pneumatique avec une largeur de rainure (W3) plus petite que celle de la rainure principale d'épaulement (3) est prévue dans la portion en relief d'épaulement (7) sur le côté vers la rainure principale d'épaulement,
un rapport (W1/W2) d'une largeur en direction axiale du pneumatique (W1) de la portion en relief d'épaulement (7) sur une largeur en direction axiale du pneumatique (W2) de la portion en relief médiane (8) est de 1,6 à 2,4,
**caractérisé en ce que**
une première valeur de cambrage (C), qui est une distance en direction radiale du pneumatique entre une position à l'équateur de pneumatique (a) et le bord de roulement (Te) dans un profil de la bande de roulement dans une section transversale du pneumatique qui inclut un axe de rotation du pneumatique, dans un état normal non chargé dans lequel le bandage pneumatique (1) est monté sur une jante normale et est rempli avec de l'air à pression interne normale, est de 5,3 % à 6,5 % d'une largeur de contact au sol de la bande de roulement (TW),
dans lequel le bord de roulement (Te) se réfère à la position de contact au sol du côté le plus extérieur en direction axiale du pneumatique quand le pneumatique dans l'état normal non chargé et chargé avec une charge normale est placé au sol sur une surface plane sous un angle de cambrage de 0°.

2. Bandage pneumatique (1) selon la revendication 1, dans lequel une seconde valeur de cambrage (C2), qui est une distance en direction radiale du pneumatique entre la position à l'équateur de pneumatique (a) et une position du centre de la rainure étroite d'épaulement (10) dans le profil de la bande de roulement, est de 0,5 % à 2,5 % de la largeur de contact au sol de la bande de roulement (TW).

3. Bandage pneumatique (1) selon l'une quelconque des revendications 1 et 2, dans lequel une largeur (W3) de la rainure étroite d'épaulement (10) est de 0,5 % à 1,5 % de la largeur de contact au sol de la bande de roulement (TW).

4. Bandage pneumatique (1) selon l'une quelconque des revendications 1 à 3, dans lequel une profondeur (d3) de la rainure étroite d'épaulement (10) est de 0,34 à 0,47 fois une profondeur de la rainure principale d'épaulement (3).

5. Bandage pneumatique (1) selon l'une quelconque des revendications 1 à 4, dans lequel
la portion en relief d'épaulement (7) inclut une portion côté intérieur (11) entre la rainure principale d'épaulement (3) et la rainure étroite d'épaulement (10), et
une largeur en direction axiale du pneumatique de la portion côté intérieur (11) est de 3,3 % à 3,9 % de la largeur de contact au sol de la bande de roulement (TW).

6. Bandage pneumatique (1) selon l'une quelconque des revendications 1 à 5, dans lequel
une multiplicité de rainures transversales médianes (20), qui s'étendent chacune depuis la rainure principale d'épaulement (3) en oblique par rapport à la direction axiale du pneumatique et qui se terminent à l'intérieur de la portion en relief médiane (8) sont prévues dans la portion en relief médiane (8), et
les rainures transversales médianes (20) incluent des premières rainures transversales médianes (21), et des secondes rainures transversales médianes (22) qui ont une longueur, en direction axiale du pneumatique, plus courte que celle des premières rainures transversales médianes (21).

7. Bandage pneumatique (1) selon la revendication 6, dans lequel
les rainures transversales médianes (20) incluent chacune une portion côté extérieur (24) qui a une largeur (W6) de 1,0 à 2,5 mm et une fente en fond de rainure (25) qui s'étend depuis une surface de fond de la portion côté extérieur (24) vers un côté intérieur en direction radiale du pneumatique, et
la fente en fond de rainure (25) de chacune des premières rainures transversales médianes (21) inclut une première portion (26) qui a une profondeur constante et une seconde portion (27) dont la profondeur est graduellement réduite depuis la première portion (26) vers la rainure principale d'épaulement (3).

8. Bandage pneumatique (1) selon la revendication 1, dans lequel
la portion en relief d'épaulement (7) comporte une pluralité de rainures d'épaulement (15) formées à intervalles le long de la direction circonférentielle du pneumatique de telle façon que chacune des rainures d'épaulement (15) s'étend au moins depuis un bord de roulement (Te) vers un côté intérieur, en direction axiale du pneumatique, et se termine sans atteindre la rainure étroite d'épaulement (10), et les rainures d'épaulement (15) ont une pluralité de fentes de connexion (17) sur des côtés intérieurs, en direction axiale du pneumatique, des rainures d'épaulement (15) respectivement de telle façon que la pluralité de fentes de connexion (17) s'étendent depuis des extrémités intérieures (15i) des rainures d'épaulement (15) à travers la rainure étroite d'épaulement (10) pour atteindre la rainure principale d'épaulement (3), et en ce que chacune des fentes de connexion (17) inclut une première portion (18) sur un côté vers la rainure principale d'épaulement, et une seconde portion (19) ayant une surface de fond qui est surélevée par rapport à la première portion (18) sur le côté vers le bord de roulement (Te).

9. Bandage pneumatique (1) selon la revendication 8, dans lequel chacune des fentes de connexion (17) est formée de telle façon que la seconde portion (19) est formée entre la première portion (18) et la rainure d'épaulement (15), de manière telle qu'une profondeur (d5) de la seconde portion (19) est dans une plage de 0,40 à 0,60 fois une profondeur (d4) de la première portion (18).

10. Bandage pneumatique (1) selon la revendication 8, dans lequel la portion en relief d'épaulement (7) a au moins une fente d'épaulement (16) formée entre des rainures d'épaulement adjacentes (15), dans la direction circonférentielle du pneumatique, de telle façon que la fente d'épaulement (16) s'étend sensiblement parallèlement aux rainures d'épaulement (15) au moins depuis le bord de roulement (Te) vers le côté intérieur en direction axiale du pneumatique.

11. Bandage pneumatique (1) selon la revendication 8, dans lequel la portion en relief d'épaulement (7) a au moins une fente d'épaulement (16) formée entre des rainures d'épaulement adjacentes (15) dans la direction circonférentielle du pneumatique, de telle façon que la fente d'épaulement (16) s'étend sensiblement parallèlement aux rainures d'épaulement (15) au moins depuis le bord de roulement (Te) vers le côté intérieur, en direction axiale du pneumatique, et se termine sans atteindre la rainure étroite d'épaulement (10).

12. Bandage pneumatique (1) selon la revendication 10, dans lequel la fente d'épaulement (16) comporte une portion surélevée (13) ayant une surface de fond partiellement surélevée.

13. Bandage pneumatique (1) selon l'une quelconque des revendications 1 à 7, dans lequel la portion en relief médiane (8) a une pluralité de rainures transversales médianes (20), de telle façon que chacune des rainures transversales médianes (20) s'étend depuis la rainure principale d'épaulement (3) en oblique par rapport à la direction axiale du pneumatique et se termine à l'intérieur de la portion en relief médiane (8).

14. Bandage pneumatique (1) selon la revendication 13, dans lequel les rainures transversales médianes (20) sont inclinées sous un angle θ1 dans une plage de 35 à 65° par rapport à la direction circonférentielle du pneumatique.

15. Bandage pneumatique (1) selon l'une quelconque des revendications 1 à 7, dans lequel la portion en relief médiane (8) a une pluralité de rainures transversales médianes (20), de telle façon que chacune des rainures transversales médianes (20) s'étend depuis la rainure principale d'épaulement (3) en oblique par rapport à la direction axiale du pneumatique et se termine sur le côté intérieur, dans la direction axiale du pneumatique, au-delà d'un centre, dans la direction en largeur, de la portion en relief médiane (8).
